# EUROPEAN PATENT APPLICATION

(11) **EP 3 450 250 A1**
(43) Date of publication of application: **06.03.2019**
(21) Application number: 17198643.3
(22) Date of filing: 26.10.2017
(51) Int. Cl.: B60Q 1/00, B60Q 1/12, B62D 25/10

(54) **DEVICE FOR INCREASING THE FRONT VISIBILITY OF A VEHICLE**

(30) Priority: 04.09.2017 IT 202017098709 U
(71) Applicant: Gitto, Antonino, 95031 Adrano (CT) (IT)
(72) Inventor: Gitto, Antonino, 95031 Adrano (CT) (IT)
(74) Representative: Romano, Giuseppe

(57) **Abstract**

The present invention can be used in the automotive industry and it relates to a device (1) suitable to be applied on the body of a car, in particular at the hood (100) or the front mudguards (200), with the purpose of improving front visibility of the driver. In the specific case, said device (1) comprises a series of light devices (30), connected to the light devices for visual signalling and lighting of the car so as to repeat the operation thereof and of the connecting means (20) apt to guarantee the device (1) to the body of the vehicle. The present invention further relates to a hood (100') and to a mudguard comprising elements which improve the front visibility of the driver, in particular the perception of the proportions and the overall dimensions of the front portion of the vehicle. At last, the present invention relates to a vehicle comprising the above-mentioned hood (100') or the above-mentioned mudguard.

## Description

### Technical field of the invention

The present invention can be used in the automotive industry and it relates to a device suitable to be applied on the body of a vehicle, in particular at the hood or the front mudguards, with the purpose of improving the front visibility of the driver.

The invention further relates to a hood and to a front mudguard of a vehicle which facilitate visibility and in particular the perception of the proportions and overall dimensions of the car, in the specific of the front portion of the latter.

At last, the present invention relates to a vehicle apt to improve visibility and in particular the perception of the proportions and the overall dimensions of the front portion thereof by the driver.

### Background

The visibility of the road surface is an element of fundamental importance for all drivers of vehicles. Generally, the car drivers wish to see clearly all ends of the car which they are driving, both as far as the rear portion and the front portion are concerned, so as to perceive at best the proportions and the overall dimensions of the vehicle with the purpose of evaluating correctly the distances which separate the latter from the objects or obstacles existing along the route.

Conventionally, cars are characterized by a front chassis which comprises a bumper, a hood, mudguards and a windscreen. Currently, said front chassis, considering its shape, in many cars has the disadvantage of reducing considerably the front visibility of the driver. In the specific case, the tilting, length and height of the hood of many cars create blind spots in the car front portion which makes the driver to have difficulty in driving, above all in restricted spaces and during parking. In such situations in particular, the driver can be in trouble, as he/she does not perceive correctly the overall dimensions of the car and he/she cannot be able to evaluate precisely the distance which separates the objects or obstacles from the car front portion.

With the development of even more efficient cars from the fuel consumption point of view, the front chassis in particular has subjected modifications with the purpose of making cars more and more aerodynamical. Moreover, the safety standards introduced in the last years to limit the damages to pedestrians in case of accident, have obliged the cars' manufacturers to develop cars characterized by having a minimum space between the hood and the engine components so that the pedestrian, during the impact, does not contact the more rigid portions of the engine. The consequence of these factors has been the modification of the hoods of many modern cars, which nowadays result to be higher and higher and more and more tilted with respect to the road surface, making in this way more and more difficult for the driver to see exactly the point wherein the front chassis of his/her car ends up. The above-mentioned changes, then, useful to improve the car aerodynamics and the pedestrians' safety, however, have made that in many cars blind spots are created in the front portion of the car, making impossible for the driver to see what there is immediately in front of the car lights and above all making that the driver is less facilitated to understand the car proportions and the distances which separate the front portion of his/her car from other cars, objects or obstacles on the road. Such problems amplify considerably in situations when driving in particularly narrow passages or during parking, wherein the wrong perception of the car overall dimensions by the driver can cause accident or damages to the car.

The visibility problems, notwithstanding the several possibilities for adjusting the seat, are further amplified for short-stature people, who without the help of modern devices such as front sensors or cameras, are practically unable to see the hood front ending portion.

Nowadays, then, whenever a driver is in the situation of having to drive new means of transport, a long training period is required aimed at understanding at best the car overall dimensions. The only devices currently on the market which solve at least partially the problem of the car front visibility and of the perception of the overall dimensions of the same, are constituted by distance sensors or cameras, which however represent a quite expensive solution and are not always applicable to already existing cars.

### Summary of the invention

The object of the present invention is then to provide a device suitable to be applied on the body of a car, in particular at the front mudguards or the hood, which increases the perception of the proportions and the overall dimensions of the vehicle by the driver, by allowing the latter to evaluate correctly the point wherein the car front chassis ends up, allowing to obviate the drawbacks mentioned above with reference to the known art. This is obtained through a device as defined in claim 1.

An additional object of the present invention is to provide a hood apt to increase the perception of the proportions and the overall dimensions of the car by the driver, by facilitating the vision of the car front end. This is obtained through a hood as defined in claim 7.

The object of the present invention is also to provide a mudguard which increases the perception of the proportions and the overall dimensions of the car by the driver, by easing the vision of the car front end. This is obtained through a mudguard as defined in claim 10.

At last, the object of the present invention is also to provide a vehicle having elements which facilitate the perception of the proportions and the overall dimensions of the vehicle itself, in particular as far as the front portion thereof is concerned. This is obtained through a vehicle as defined in claim 13.

Secondary features of the device according to the present invention are defined in the depending claims.

The advantages, as well as the features and the use modes of the present invention will result evident from the following detailed description of preferred embodiments thereof, shown by way of example and not for limitative purpose, by referring to the figures of the enclosed drawings, wherein:
- figure 1 shows the device according to the present invention;
- figure 2 shows a type of connecting means apt to fasten the subject device to the hood or to the mudguard of a car;
- figure 3 shows the device according to the present invention applied to the hood of a car;
- figure 4 shows the hood according to the present invention.

The present invention, by overcoming the above-mentioned problems, involves several and evident advantages.

In particular the device according to the present invention, positioned on the hood or on the front mudguards, increases the visibility and in particular the perception of the proportions and the overall dimensions of the front portion of the car, easing the driver in particular in manoeuvres in narrow spaces such as parking or passages in bottlenecks. In particular, the device according to the present invention constitutes an important improvement of safety in driving, by allowing the driver to see more clearly the ending portion of the front chassis of the car with the purpose of perceive better the distances which separate the latter from obstacles or other vehicles.

The subject device further represents a novelty as to safety of drivers, by allowing them to evaluate directly, without having to get off the vehicle, the correct operation of the light devices for visual signalling and lighting of the car.

Moreover, the subject device, as it is particularly visible not only from the driver, but even from pedestrians and drivers of other cars, improves safety even of the latter. The subject invention, in fact, allows third parties to see more clearly the car equipped with the device according to the present invention, allowing them to perceive more easily the position of the car, for example, during parking, or contributing to decrease the accident possibilities.

At last, the device according to the present invention represents a novelty in the automotive industry, which contributes in making the car more interesting and prestigious.

Other advantages, features and use modes of the present invention will result evident from the following detailed description of some embodiments, shown by way of example and not with limitative purpose.

### Detailed description of preferred embodiments

Several embodiments and variants of the invention will be described hereinafter, and this with reference to the above-mentioned figures.

The different embodiments and variants described hereinafter are subjected to be used in combination, where compatible.

The present invention in particular relates to a device, apt to be placed on the hood or on the front mudguard of a car so as to be visible from the inside of the passenger compartment, apt to improve visibility and in particular the perception of the proportions and the overall dimensions of the car front portion by the driver.

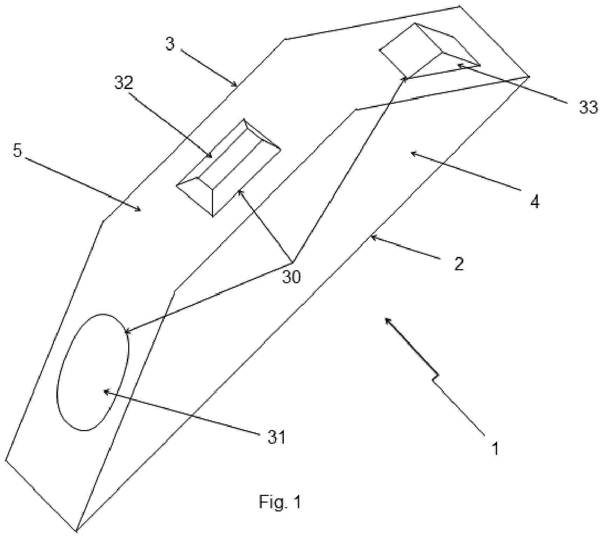

By specifically referring to Figure 1, the device according to the present invention is designated as a whole with 1. Such device, according to the preferred embodiment, is constituted by a base 2, two side faces 3 and 4 and a connecting element 5 between said side faces 3 and 4. In the preferred embodiment, the two side faces 3 and 4 preferably have trapezoidal shape.

Other shapes result to be possible on condition that the side faces constitute a raised element from the body of the car, so that the device 1 results to be well visible from the inside of the passenger compartment.

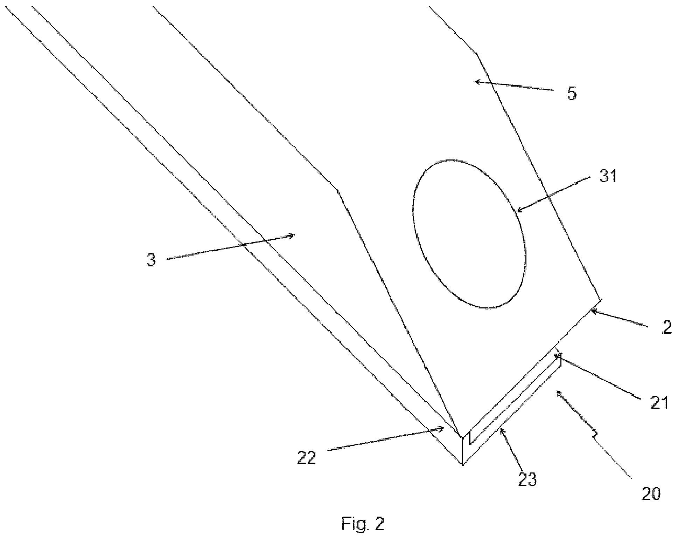

As it can be seen in Figure 2, the device 1 comprises connecting means 20 preferably placed in the base 2, which allows the device 1 itself to be fixed to the body car, preferably at the hood 100 or the front mudguard 200. Said connecting means 20, for example, can be constituted by a profile having a groove 21 apt to cooperate and to be coupled with the profile of the hood 100 or of the mudguard 200. In such embodiment, the base 2 comprises a first element 22 having sizes so as to pass through the slot existing between the hood 100 and the mudguard 200. To said first element 22, a second element 23 is welded so as to form with the first element 22 and with the base 2, the groove 21. The whole surface of the groove is preferably coated with a material apt to not to danger the body and to guarantee a greater grip with the hood 100 or the mudguard 200.

Other types of connecting means (20) can include fastening through mechanical means. In such case the device 1, at the base 2, can include holes, preferably two, having threaded profile. Suitable screws from the threaded profile, apt to be coupled to the above-mentioned holes, are made to pass on openings suitably positioned on the hood 100 or the mudguard 200 so as to fasten the device 1 to the body of the car.

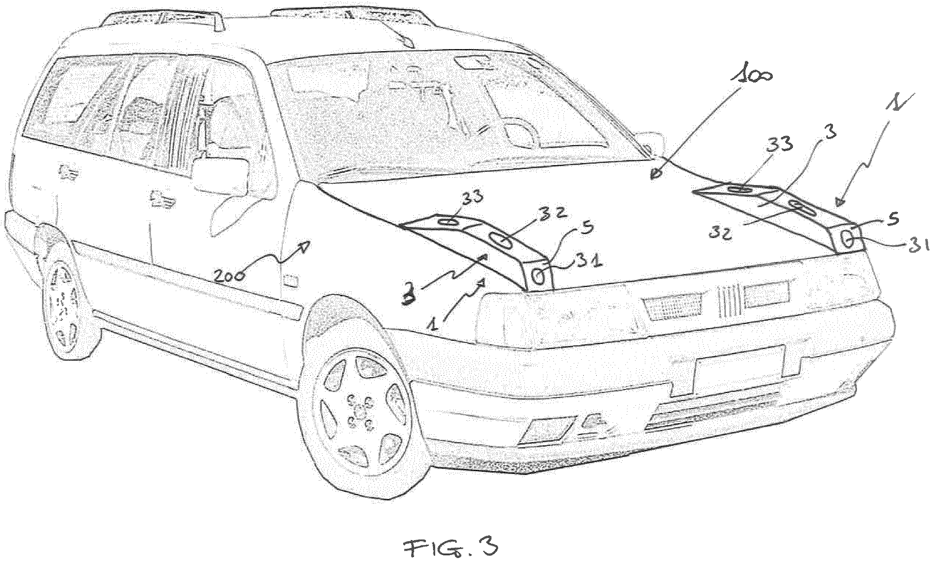

At last, the device 1 can be fixed to the body, in particular to the front portion of the hood 100 or of the mudguard 200, by means an adhesive strip resistant to the atmospherical agents. The fastening position has to be so as to make visible the device 1 from the inside of the passenger compartment and it has to be near as much as possible to the car front end, in order to guarantee the maximum perception of the proportions of the car to the driver. In particular, as it can be seen in Figure 3, the device 1 for example is fastened to the sides of the hood 100 of the car so that the side faces 3 and 4 result to be parallel to the forward direction of the car. In this way, the device 1 is characterized by a proximal end with respect to the passenger compartment and by a distal end with respect to the latter, placed in proximity of the front end of the front chassis.

The device 1 at last comprises signalling means 30, preferably of light type, preferably placed on the connecting element 5 between the two side faces 3 and 4, so that they result to be well visible from the inside of the passenger compartment. Such signalling means 30 can be connected directly, for example, by means electric cables, to the light devices for visual signalling and lighting of the car or, alternatively, to a control unit placed inside the car itself, which controls the switching on and the switching off of such light devices for visual signalling and lighting. This connection allows said signalling means 30 to switch on or switch off contemporarily with respect to the other light devices for visual signalling and lighting of the car. In particular, said signalling means 30 preferably comprises three lamps, or equivalent light devices, connected to the indicators, brakes and head lamps of the car itself, respectively. In the specific case, the device 1 comprises a first light device 31, connected to the head lamps of the car and placed in the distal end of the device with respect to the passenger compartment of the car. A second light device 32 is placed in the upper portion of the device 1, in particular in the central portion of the connecting element 5 between the side faces 3 and 4. Said light device 32 is connected to the indicators of the car, so as to switch on and switch off intermittently when the indicators are activated. At last a third light device 33 is placed in the proximal portion of the device 1 with respect to the passenger compartment of the car and it is connected with the brakes of the latter. The signalling means 30 is integrated inside suitable glasses which allow the emitted light to assume a well precise colour for whoever observes it from outside. In particular the light device 31 results to emit a white light, the light device 32 emits a yellow light, whereas the light device 33 emits a red light. In this way, the signalling means 30 repeat the standard operation of the light devices for visual signalling and lighting of the car, by acting as warning light for the driver who then is able to evaluate in every instant, without getting off the car, the correct operation of the light devices for visual signalling and lighting of the car, and by making the car more visible from pedestrians and drivers of other vehicles.

The present invention further relates to a hood apt to improve visibility and in particular the perception of the proportions and the overall dimensions of the car front portion by the driver.

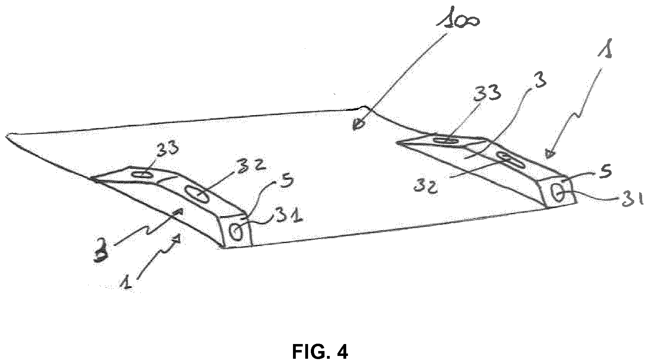

As it can be seen in Figure 4, the hood 100' according to the present invention in particular is characterized by a front end 110 with respect to the forward direction of the car, and by two side ends 120, 130. The front end 110', in the specific case, in the moment in which the hood 100' is assembled on a car, is placed near the front bumper of the same, whereas the side ends are at the front mudguards.

Said hood 100' comprises two projections 140 and 150, each one implemented near said front side ends. Such projections 140 and 150 constitute a raised surface with respect to the hood 100', easily visible from the inside of the passenger compartment. The position of said projections 140' and 150' and the fact that they constitute a raised element with respect to the hood 100', make that they contribute to improve the perception of the overall dimensions of the car, in particular of the overall dimensions of the front portion thereof, by easing the vision of the front end of the hood by the driver. The shapes and the lines of said projections 140 and 150 are integrated to the ones of the specific model of hood and, consequently, they do not alter the aerodynamical coefficient of the car whereon the hood 100' itself is assembled.

The hood further comprises signalling means, preferably of light type, preferably placed on said projections, so that it results to be well visible from inside of the passenger compartment. Such signalling means can be connected directly, for example, by means of electric cables, to the light devices for visual signalling and lighting of the car or, alternatively, to a control unit placed inside the car itself, which controls the switching-on and the switching-off of such light devices for visual signalling and lighting. This connection allows said signalling means to switch on or switch off contemporarily with respect to the other light devices for visual signalling and lighting of the car. In particular, said signalling means preferably comprises three lamps, or equivalent light devices, connected to the indicators, brakes and head lamps of the car itself, respectively. In the specific case, each one of the projections of the hood 100' comprises a first light device 31', connected to the head lamps of the car, a second light device 32' connected to the indicators of the car and a third light device 33' connected to the brakes of the car. The signalling means is integrated inside suitable glasses which allow the emitted light to assume a well precise colour for whoever observes it from outside. In particular the light device 31' results to emit a white light, the light device 32' emits a yellow light, whereas the light device 33' emits a red light. In this way, the signalling means repeats the standard operation of the light devices for visual signalling and lighting of the car, acting as warning light for the driver who then is able to evaluate in each instant, without getting off the car, the correct operation of the light devices for visual signalling and lighting of the car, and making the car more visible from pedestrians and drivers of other vehicles.

The present invention also relates to a front mudguard apt to improve visibility and in particular the perception of the proportions and the overall dimensions of the car front portion by the driver.

The front mudguard according to the present invention comprises a front end with respect to the forward direction of the car, which in turn is provided with a projection, placed at said front end so as to result to be well visible from the inside of the passenger compartment. Said projection constitutes a raised surface with respect to the front mudguard, easily visible from the inside of the passenger compartment. The position of such projection and the fact that it constitutes a raised element make that it contributes to improve the perception of the overall dimensions of the car, in particular of the overall dimensions of the front portion thereof, by easing the vision of the vehicle front end by the driver. The shapes and the lines of said projections are integrated to the ones of the specific model mudguard and, consequently, they do not alter the aerodynamical coefficient of the car whereon the mudguard itself is assembled.

The mudguard further comprises the signalling means, preferably of light type, preferably placed on said projection, so that it results to be well visible from the inside of the passenger compartment. Such signalling means is connected directly, for example, by means of electric cables, to the light devices for visual signalling and lighting of the car or, alternatively, to a control unit placed inside the car itself, which controls the switching-on and the switching-off of such light devices for visual signalling and lighting. This connection allows said signalling means to switch on or switch off contemporarily with respect to the other light devices for visual signalling and lighting of the car. In particular, said signalling means preferably comprises three small lamps, or equivalent light devices, connected to the indicators, brakes and head lamps of the car itself, respectively. In the specific case, the mudguard comprises a first light device, connected to the head lamps of the car, a second light device connected to the indicators of the car and a third light device connected to the brakes of the latter. The signalling means is integrated inside suitable glasses which allow the emitted light to assume a well precise colour for whoever observes it from outside. In particular the first light device results to emit a white light, the second light device emits a yellow light, whereas the third light device emits a red light. In this way, the signalling means repeats the standard operation of the light devices for visual signalling and lighting of the car, acting as warning light for the driver who then is able to evaluate in each instant, without getting off the car, the correct operation of the light devices for visual signalling and lighting of the car, and making the car more visible from pedestrians and drivers of other vehicles.

The present invention, at last, relates to a vehicle comprising the above-described hood or mudguard, with the purpose of improving visibility and in particular the perception of the proportions and the overall dimensions of the car front portion by the driver.

The present invention has been so far described with reference to preferred embodiments. It is to be meant that other embodiments belonging to the same inventive core may exist, as defined by the protective scope of the herebelow reported claims.

## Claims

1. A device (1) suitable to be positioned on the front side ends of the body of a car, at the hood (100) or the mudguards (200), apt to improve visibility of said front side ends of the car by a driver, by providing a raised surface with respect to the front portion of said hood (100) or said mudguards (200) visible from the inside of the passenger compartment, said device (1) comprising connecting means (20) apt to the fastening to said hood (100) or to said mudguard (200), so that in use said device (1) facilitates the vision of the front end portion of the vehicle by improving the perception of the proportions and the overall dimensions.

2. The device (1) according to claim 1 further comprising light-signalling means (30) which can be connected electrically to the light devices for visual signalling and lighting of the car, so that said light-signalling means (30) activates contemporarily with respect to the corresponding light devices of visual signalling and lighting of the car.

3. The device (1) according to claim 2, wherein said light-signalling means (30) comprises a light source for head lamps, indicators and brakes, respectively.

4. The device (1) according to anyone of the preceding claims, wherein the connecting means (20) comprises elements (22, 23) apt to form a groove (21) suitable to be coupled with the profile of the hood (100) or of the mudguard (200) of the car.

5. The device (1) according to anyone of claims 1 to 3, wherein the connecting means (20) comprises mechanical connecting means, preferably threaded screws, apt to couple the device (1) with the hood (100) or the mudguard (200) through holes with threaded profile placed on a base (2) of the device (1) itself.

6. The device (1) according to anyone of the preceding claims, wherein the connecting means (20) comprises an adhesive material.

7. A vehicle hood (100') comprising a front end (110) with respect to the proceeding direction of a car and two side ends (120, 130), said hood (100') further comprising two projections (140, 150) which constitute two raised surfaces, each one implemented near said front side ends with the purpose of being visible from the inside of the passenger compartment so that in use said hood (100') facilitates the vision of the front end portion of the vehicle by improving the perception of the proportions and the overall dimensions.

8. The vehicle hood (100') according to the preceding claim, further comprising light-signalling means placed at said raised surfaces and which can be connected electrically to the light devices for visual signalling and lighting of the car, so that said light-signalling means activates contemporarily with respect to the corresponding light devices for visual signalling and lighting of the car.

9. The vehicle hood (100') according to the preceding claim, wherein said light-signalling means comprises a light source for head lamps, indicators and brakes, respectively.

10. A vehicle front mudguard comprising a front end with respect to the proceeding direction of a car, said front mudguard further comprising a projection which constitutes a raised surface placed at said front end with the purpose of being visible from the inside of the passenger compartment so that in use said mudguard facilitates the vision of the front end portion of the vehicle by improving the perception of the proportions and the overall dimensions.

11. The vehicle front mudguard according to the preceding claim, further comprising light-signalling means placed at said raised surface and which can be connected electrically to the light devices for visual signalling and lighting of the car, so that said light-signalling means activates contemporarily with respect to the corresponding light devices for visual signalling and lighting of the car.

12. The front mudguard according to the preceding claim, wherein said light-signalling means comprises a light source for head lamps, indicators and brakes, respectively.

13. A vehicle comprising a hood (100') according to anyone of claims 7 to 9 and/or a pair of front mudguards each one according to anyone of claims 10 to 12.
